(19) Europäisches Patentamt
European Patent Office
Office européen des brevets

(11) Numéro de publication: **0 055 957**
**B2**

(12) **NOUVEAU FASCICULE DE BREVET EUROPEEN**

(45) Date de publication du nouveau fascicule du brevet: **17.11.88**

(51) Int. Cl.⁴: **C 08 L 83/04**

(21) Numéro de dépôt: **81402013.7**

(22) Date de dépôt: **16.12.81**

(54) **Procédé de moulage par injection de compositions organopolysiloxaniques pâteuses.**

(30) Priorité: **07.01.81 FR 8100114**

(43) Date de publication de la demande:
**14.07.82 Bulletin 82/28**

(45) Mention de la délivrance du brevet:
**10.04.85 Bulletin 85/15**

(45) Mention de la décision concernant l'opposition:
**17.11.88 Bulletin 88/46**

(84) Etats contractants désignés:
**DE NL SE**

(56) Documents cités:
**DE - A - 2 504 357**
**FR - A - 2 453 197**
**GB - A - 760 451**
**GB - A - 797 979**
**US - A - 2 838 472**
**US - A - 3 791 998**
**US - A - 4 162 243**
**US - A - 4 173 560**

**PLASTIQUES MODERNES ET ELASTOMERES, volume 31, no. 10, décembre 1979 PARIS (FR) "Elastomères: le moulage des silicones liquides entre en lice" pages 77-78**
**Dow Corning brochure "Fabricating with Silastic brand rubber, pp. 3,11,12,20,21 (Sept. 1973)**

(73) Titulaire: **RHONE-POULENC CHIMIE, 25, quai Paul Doumer, F-92408 Courbevoie Cédex (FR)**

(72) Inventeur: **Bouverot, Noel, rue de Chassagne Ternay, F-69360 Saint Symphorien d'Ozon (FR)**
Inventeur: **Medard, Paul, 5, rue François Jomard, F-69600 Oullins (FR)**
Inventeur: **Viale, Alain, 62, rue Gabriel Péri, F-69200 Venissieux (FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex (FR)**

**EP 0 055 957 B2**

ACTORUM AG

## Description

La présente invention a pour objet un procédé de moulage par injection de compositions organopolysiloxaniques pâteuses, transvasables au moyen de pompes, durcissant à chaud en élastomères. Ces compositions sont formées par mélange d'huiles diorganopolysiloxaniques, de silices finement divisées, d'agents antistructures et d'un agent de réticulation, celui-ci étant le peroxyde de dichloro-2,4-benzoyle.

Les documents relatifs à la technologie de la fabrication des élastomères silicones vulcanisés à chaud, issus de compositions caoutchouteuses, donc non pâteuses (formées par mélange de gommes diorganopolysiloxaniques, de charges minérales, d'agents antistructures et d'agents de réticulation du groupe des peroxydes organiques) enseignent que le choix des agents de réticulation dépend étroitement des conditions de vulcanisation des compositions et des machines adaptées à ces conditions.

Ainsi le peroxyde de dichloro-2,4 benzoyle est largement employé pour le durcissement à températures élevées, de préférence vers 200–400°C, en four chaud, à l'air ambiant, de compositions extrudées FR-A-1 113 032). Il est, par contre, utilisé avec retenue dans le moulage par injection car du fait de sa température de décomposition assez basse et de sa vitesse élevée de décomposition, il risque de provoquer, avant le remplissage complet des moules, le durcissement des compositions moulées par injection; c'est ce qu'on appelle le grillage (Ouvrage de W. Lynch «Handbook of silicon rubber fabrication» pages 35, 36 et 37). On préfère utiliser sur les machines industrielles d'injection le peroxyde de dicumyle et le bis (t-butylperoxy)-2,5 diméthyl-2,5 hexane (ouvrage de W. Lynch précité, pages 66, 67 et 71).

L'emploi du peroxyde de dichloro-2,4 benzoyle est décrit (parmi l'emploi d'autres peroxydes), dans US-A-3 791 998 pour le durcissement de compositions, non plus caoutchouteuses mais pâteuses, formées par mélange d'huiles diorganopolysiloxaniques de viscosité de l'ordre de 100 000 à 750 000 mPa·s à 25°C, de charges minérales et d'agents antistructures. Ces compositions sont déposées sur des tissus puis durcies et les matériaux obtenus sont utilisés pour l'isolation électrique. Les 2 exemples du brevet illustrent l'emploi du peroxyde de dichloro-2,4 benzoyle:

i) à l'exemple 1 la composition mise en œuvre est durcie par chauffage pendant 10 minutes à 160°C, à l'air ambiant, 2i) à l'exemple 2, la même composition, est durcie par chauffage, pendant 3 minutes à une température ne dépassant pas 120°C, dans un moule; elle subit un moulage par compression. Il n'est pas fait allusion dans ce brevet à la technique du moulage par injection.

Cependant il y est fait allusion dans un autre brevet, US-A-4 173 560, qui décrit des compositions, assez proches des précédentes, formées par mélange d'huiles diorganopolysiloxaniques, ayant environ, par mole, 2 radicaux vinyles liés aux atomes de silicium, de viscosité de préférence 200 à 100 000 mPa·s à 25°C, de silices traitées par des amidoorganopolysiloxanes vinylés et d'un système de réticulation constitué de peroxydes organiques ou des associations organohydrogénopolysiloxanes-dérivés du platine; parmi les peroxydes est englobé le peroxyde de dichloro-2,4 benzoyle, mais les peroxydes préférés sont le peroxyde de di-t-butyle, le perbenzoate de t-butyle et le bis(t-butylperoxy)-2,5 diméthyl-2,5 hexane.

Le brevet US-A-4 173 560 enseigne que les compositions qui sont réservées pour le moulage dans un procédé par injection «liquide», ont une viscosité bien définie que ne doit pas dépasser 160 Pa·s, valeur probablement déterminée à 25°C (colonne 6, lignes 20 à 26 de US-A-4 173 560). De telles compositions sont donc relativement peu visqueuses.

Ces compositions, et celles moulables par une autre technique, nécessitent, pour leur fabrication, l'incorporation de silices finement divisées traitées selon un procédé mettant en œuvre des composés organosiliciques (les amidoorganopolysiloxanes vinylés précités) peu accessibles sur le marché des silicones, et des solvants. Elles sont durcies en suivant les conditions de températures et de durées habituellement pratiquées par les techniciens des élastomères silicones (colonne 6, lignes 5 et 6 de US-A-4 173 560).

Seul l'exemple 3 de ce brevet illustre l'utilisation d'un peroxyde qui est le bis(t-butylperoxy)-2,5 diméthyl-2,5 hexane. Les compositions renfermant ce peroxyde sont chauffées dans un moule pendant 15 minutes à 175°C; elles subissent un moulage par compression; leur moulage par injection n'est pas illustré.

Le moulage par injection permet de fabriquer des pièces moulées d'élastomères silicones, de bonne qualité, à cadences rapides. Il exige, dans le cas de l'injection de compositions organopolysiloxaniques caoutchouteuses, des machines puissantes, souvent lourdes et coûteuses (pages 64 à 83 de l'ouvrage de W. Lynch intitulé «Handbook of silicon rubber fabrication»). Cependant dans le cas de l'injection de compositions dites fluides (celles de US-A-4 173 560) le moulage peut être effectué sur des machines légères, peu coûteuses, par exemple du type de celles utilisées pour l'injection des matières plastiques de basse et moyenne viscosité à l'état fondu. Il serait intéressant, sur le plan industriel, d'injecter à l'aide de ces machines légères des compositions moins fluides que les précédentes, et fabriquées à partir de silices finement divisées non traitées ou traitées par des composés organosiliciques très accessibles sur le marché des produits chimiques, et renfermant en tant qu'agent de réticulation, le peroxyde de dichloro-2,4 benzoyle. Ce peroxyde possède, comme déjà indiqué, une vitesse de décomposition très rapide, ce qui permettrait d'accroître, par exemple, par rapport au peroxyde de bis(t-butylperoxy)-2,5 diméthyl-2,5

hexane, le nombre de pièces moulées par unité de temps.

D'une façon inattendue il a maintenant été trouvé que l'on pouvait utiliser, sans risque de grillages, dans un procédé de moulage par injection, sur des machines à injection du type de celles utilisées pour les matières plastiques de basse et moyenne viscosité à l'état fondu, des compositions organopolysiloxaniques pâteuses, renfermant le peroxyde de dichloro-2,4 benzoyle comme agent de réticulation, et durcissant par chauffage dans une zone de températures où sont habituellement durcies les compositions organopolysiloxaniques à l'aide, par exemple, du peroxyde de dicumyle ou du bis(t-butylperoxy)-2,5 diméthyl-2,5 hexane.

Plus précisémment la présente invention a pour objet un procédé de moulage par injection, sur machines d'injection opérant à de basses pressions d'injection, par exemple, inférieures à 45 mPa, de compositions organopolysiloxaniques, caractérisé en ce que les compositions organopolysiloxaniques sont formées par mélange de (les parties et les pourcentages sont exprimés en poids):

$A_1$–100 parties d'huiles diorganopolysiloxaniques de viscosité 500 à 300 000 mPa·s à 25°C, consitutées d'une succession de motifs de formule $R_2SiO$ et blocquées à chaque extrémité de leur chaîne par des motifs de formule $R_2R'SiO_{0,5}$, dans lesquelles les symboles R, identiques du différents, représentent des radicaux hydrocarbonés, substitués ou non par des atomes d'halogènes, des groupes cyano, ayant de 1 à 8 atomes de carbone, le symbole R' a la signification des symboles R ou représente un radical hydroxyle, alcoxyle ayant de 1 à 4 atomes de carbone, β-méthoxyethoxyle.

$B_1$–10 à 75 parties de silices renforçantes finement divisées, de surface spécifique d'au moins 50 m²/g. Ces silices peuvent être non traitées ou traitées; quand les silices sont traitées elles le sont généralement dans la proportion d'au moins 5% par des composés organosiliciques fabriqués industriellement, apportant des motifs choisis parmi ceux de formules $(CH_3)_2SiO$, $(CH_3)(CH_2=CH)SiO$, $(CH_3)_3SiO_{0,5}$, $(CH_3)_2(CH_2=CH)SiO_{0,5}$.

$C_1$–1 à 20 parties d'agents antistructures

$D_1$–0,1 à 4 parties du peroxyde de dichloro-2,4 benzoyle, et en ce que l'on effectue le moulage sur une plage de températures allant de 125 à 225°C. Ce procédé est avantageux car il permet une durée de durcissement inférieure à 15 secondes, et une durée d'un cycle de moulage inférieure à 25 secondes.

Les compositions organopolysiloxaniques pâteuses mises en œuvre selon le procédé de la présente invention ont une pénétration (mesurée selon la norme NF T 60–132) s'étalant de 90 à 350, de préférence 100 à 330; ces valeurs correspondent sensiblement à des viscosités s'étalant de 55 000 Pa·s à 25°C à 4000 Pa·s à 25°C, de préférence 50 000 Pa·s à 25°C à 4500 Pa·s à 25°C, mesurées avec un gradient de vitesse de $0,1 s^{-1}$.

Les huiles diorganopolysiloxaniques $A_1$ de viscosité 500 à 300 000 mPa·s à 25°C, de préférence 800 à 250 000 mPa.s à 25°C, sont des polymères linéaires constitués essentiellement des motifs précités de formules $R_2SiO$ et $R_2R'SiO_{0,5}$; il n'est cependant pas exclu qu'elles renferment de faibles quantités représentant au plus 1% en nombre, de motifs de forumles $RSiO_{1,5}$ et/ou $SiO_2$.

Les radicaux hydrocarbonés, substitués ou non par des atomes d'halogènes, des groupes cyano, ayant de 1 à 8 atomes de carbone, représentés par les symboles R englobent:

- les radicaux alcoyles et halogénoalcoyles ayant de 1 à 3 atomes de carbone tels que les radicaux méthyles, éthyles, propyles, isopropyles, trifluoro-3,3,3 propyles
- les radicaux alcényles ayant de 2 à 4 atomes de carbone tels que les radicaux vinyles, allyles, butène-2 yles
- les radicaux cycloalcoyles et halogènocycloalcoyles, ayant de 5 à 6 atomes de carbone nucléaire, tels que les radicaux cyclopentyles, cyclohexyles, méthylcyclohexyles, chlorocyclohexyles
- les radicaux aryles et halogénoaryles mononucléaires, ayant de 6 à 8 atomes de carbone tels que les radicaux phényles, tolyles, xylyles, chlorophényles, dichlorophényles, trichlorophényles
- les radicaux cyanoalcoyles dont les restes alcoyles ont de 2 à 3 atomes de carbone tels que les radicaux β-cyanoéthyles, γ-cyanopropyles.

Comme exemples concrets de radicaux alcoxyles, ayant de 1 à 4 atomes de carbone, représentés par les radicaux R', peuvent être cités les radicaux methoxyles, ethoxyles, n-propoxyles, isopropoxyles, n-butoxyles.

A titre illustratif de motifs constituant essentiellement les huiles diorganopolysiloxaniques $A_1$, peuvent être cités respectivement les motifs $R_2SiO$ de formules:

$(CH_3)_2SiO$, $(CH_3)(CH_2=CH)SiO$,
$CH_3(C_6H_5)SiO$, $(C_6H_5)_2SiO$,
$C_6H_5(CH_2=CH)SiO$, $CF_3CH_2CH_2(CH_3)SiO$,
$NC-CH_2CH_2(CH_3)SiO$, $NC(CH_2)_3CH_3SiO$, et les motifs $R_2R'SiO_{0,5}$ de formule:

$(CH_3)_3SiO_{0,5}$, $CH_2=CH(CH_3)_2SiO_{0,5}$,
$(CH_3)_2C_6H_5SiO_{0,5}$, $CH_3(C_6H_5)(CH_2=CH)SiO_{0,5}$,
$HO(CH_3)_2SiO_{0,5}$, $HO(CH_3)(CH_2=CH)SiO_{0,5}$,
$CH_3O(CH_3)_2SiO_{0,5}$ $CH_3CH_2O(CH_3)_2SiO_{0,5}$,
$CH_3OCH_2CH_2O(CH_3)_2SiO_{0,5}$

De préférence sont utilisées des huiles diméthylpolysiloxaniques contenant une faible quantité de radicaux vinyles représentant par exemple de 0,005 à 0,5% du poids des huiles; ces radicaux vinyles sont présents sous forme de motifs de formules $CH_3(CH_2=CH)SiO$ et/ou $(CH_3)_2CH_2=CHSiO_{0,5}$ et les huiles sont bloquées par des motifs de formules
$(CH_3)_3SiO_{0,5}$ et/ou $(CH_3)_2CH_2=CHSiO_{0,5}$.

Les huiles diorganopolysiloxaniques $A_1$ sont commercialisées par les fabricants de silicones; d'autre part elles peuvent être aisément fabriquées en suivant les techniques déjà connues. Ainsi l'une des plus courantes consiste à polymériser des diorganocyclopolysiloxanes à l'aide de quantités catalytiques d'agents alcalins ou acides. Au cours de cette polymérisation sont ajoutés:

1. (quand R'=R), des diorganopolysiloxanes de faible poids moléculaire de formule $R_3SiO\text{-}(R_2SiO)_xSiR_3$

x ayant une valeur suffisante pour conduire à une viscosité s'étalant de 0,5 à 100 mPa·s à 25°C

2. (quand R'=OH) de l'eau et/ou une huile de formule $HOR_2SiO(SiR_2O)_ySiR_2OH$

y ayant une valeur suffisante pour conduire à une viscosité s'étalant de 5 à 200 mPa·s à 25°C

3. (quand R'=alcoxyle ou $CH_3OCH_2CH_2O$), l'alcool corréspondant R'H et/ou une huile de faible poids moléculaire de formule $R'R_2SiO\text{-}(R_2SiO)_zSiR_2R'$

z ayant une valeur suffisante pour conduire à une viscosité s'étalant de 0,5 à 120 mPa·s à 25°C.

Les polymères obtenus sont, de préférence, purifiés en éliminant, à une température en général supérieure à 70°C et sous une pression en général inférieure à la pression atmosphérique, les composés de départ non transformés équilibrant la réaction de polymérisation ainsi que les polymères de faible poids moléculaire éventuellement formés lors de cette réaction. Il est recommandé avant de distiller les produits volatils de neutraliser les agents alcalins ou acides utilisés comme catalyseurs de polymérisation.

Les silices $B_1$ sont utilisées à raison de 10 à 75 parties, de préférence 15 à 70 parties pour 100 parties des huiles diorganopolysiloxaniques $A_1$.

Elles sont choisies parmi les silices de combustion et les silices de précipitation. Le rapport pondéral entre ces deux types de silices peut varier de 0 à 100%. Elles ont une surface spécifique (mesurée selon la méthode BET) d'au moins 50 m²/g, de préférence supérieure à 80 m²/g et pouvant dépasser 350 m²/g, une dimension moyenne des particules primaires inférieure à 80 nm et une densité apparente inférieure à 250 g/litre.

Elles sont commercialisées par les fabricants de charges minérales. Ces silices peuvent être utilisées telles quelles, ce qui est préférable étant donné que c'est la solution la moins coûteuse, ou bien après avoir été traitées par des composés organosiliciques habituellement employés pour cet usage et accessibles sur le marché des produits chimiques. De tels composés sont représentés, par exemple, par des méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes, tels que le diméthyldichlorosilane, le triméthylchlorosilane, le méthylvinyldichlorosilane, le diméthylvinylchlorosilane, des alcoxysilanes tels que le diméthyldimethoxysilane, le triméthylmethoxysilane, le triméthylethoxysilane, le diméthylvinylethoxysilane.

Lors de ce traitement les composés organosiliciques précités se fixent sur la zone superficielle des silices et/ou réagissent avec cette zone, en particulier avec les groupes hydroxyles qu'elle porte. Il en résulte un apport de motifs choisis dans le groupe constitué de ceux de formules $(CH_3)_2SiO$, $(CH_3)(CH_2{=}CH)SiO$, $(CH_3)_3SiO_{0,5}$, $(CH_3)_2(CH_2{=}CH)SiO_{0,5}$. Les silices traitées peuvent ainsi accroître leur poids de départ d'un pourcentage allant jusqu'à 20%, en général jusqu'à15%.

Les quantités de silices traitées sont avantageusement présentes à raison d'au moins 5%, de préférence 7%, des quantités de silices utilisées.

Les agents antistructures $C_1$ sont utilisés à raison de 1 à 20 parties, de préférence 2 à 15 parties, pour 100 parties des huiles diorganopolysiloxaniques $A_1$. Leur présence empêche les compositions de subir une évolution au cours du temps, laquelle évolution se traduit généralement par une diminution de la valeur des pénétrations.

Ils sont choisis le plus souvent parmi:

- les huiles diorganopolysiloxaniques de faibles viscosités, de l'ordre de 5 à 500 mPa·s à 25°C, bloquées à chaque extrémité de leur chaîne par un radical hydroxyle et/ou un radical alcoxyle ayant de 1 à 3 atomes de carbone. Les radicaux organiques, liés aux atomes de silicium de ces huiles, sont, de préférence, des radicaux méthyles, éthyles, vinyles, phényles, trifluoro-3,3,3 propyles.

A titre d'exemples concrets de ces huiles peuvent être citées les huiles α-ω dihydroxyméthylpolysiloxaniques, α-ω dihydroxyméthylphénylpolysiloxaniques, α-ω diméthoxydiméthylpolysiloxaniques et α-ω diméthoxyméthylphénylpolysiloxaniques, ayant de 3 à 12% de radicaux hydroxyles ou methoxyles.

- le diphenylsilanediol et les silanes de formules:

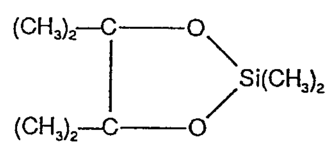
,

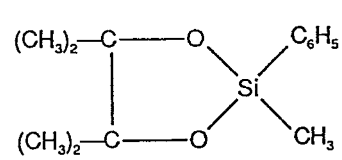

Le peroxyde de dichloro-2,4 benzoyle $D_1$ est utilisé à raison de 0,1 à 4 parties, de préférence 0,15 à 3,5 parties, pour 100 parties des huiles diorganopolysiloxaniques $A_1$.

D'autres ingrédients, en dehors des composés $A_1$, $B_1$, $C_1$ et $D_1$ peuvent être introduits dans les compositions conformes à l'invention. Ainsi avec les silices finement divisés $B_1$ peuvent être associées des charges minérales plus grossières dont le diamètre particulaire est supérieur à 0,1 μm.

Ces charges sont représentées, par exemple, par le quartz broyé, les argiles calcinées, les silices de diatomées, le carbonate de calcium, les oxydes de fer, de titane, de magnésium, d'aluminium.

Elles sont introduites à raison d'au plus 120 parties, de préférence 100 parties, pour 100 parties des huiles diorganopolysiloxaniques $A_1$. Ces charges peuvent être utilisées telles quelles ou après avoir été traitées avec les composés organosiliciques déjà cités pour le traitement des silices finement divisées $B_1$.

En outre peuvent être introduits des pigments, des stabilisants thermiques (tels que les sels d'acides carboxyliques de fer, de manganèse), des agents retardant la combustion tels que des dérivés du platine.

Ces dérivés du platine (choisis généralement parmi l'acide chloroplatinique et les complexes ou les produits de réaction de cet acide ou d'autres chlorures du platine avec des dérivés organiques ou organosiliciques) sont de préférence associés avec des oxydes et hydroxydes de cérium, ou des oxydes de titane et de fer de combustion. De telles associations, et leur introduction dans les compositions organopolysiloxaniques durcissant à chaud en élastomères, sont décrites en particulier dans FR-A-2 051 792, 2 166 313 et 2 203 846.

D'autres adjuvants peuvent encore être utilisés dans le dessein d'améliorer les propriétés mécaniques, l'adhérence à divers supports. Ces adjuvants englobent par exemple les silanes de formules ci-après, et leurs produits d'hydrolyse ou de cohydrolyse partielle:

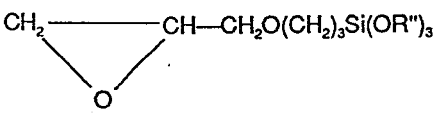

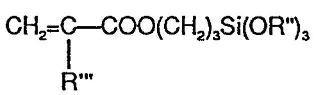

$CH_2{=}CH{-}Si(OR'')_3$

Les symboles R″ représentent les radicaux méthyles, éthyles, n-propyles, β-methoxyéthyles; le symbole R′″ représente un atome d'hydrogène ou le radical méthyle.

A titre d'exemples concrets de ces silanes peuvent être cités ceux de formules:

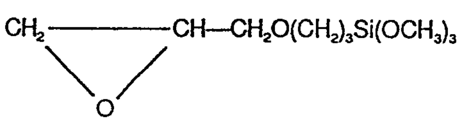

$CH{=}C(CH_3)COO(CH_2)_3Si(OCH_3)_3$

$CH_2{=}CHSi(OCH_2CH_2OCH_3)_3$

Ces adjuvants sont utilisés à raison de 0,05 à 5 parties, de préférence 0,1 à 4 parties pour 100 parties des huiles diorganopolysiloxanique $A_1$.

La préparation des compositions conformes à l'invention s'effectue par le mélange intime des divers constituants $A_1$, $B_1$, $C_1$ et $D_1$ et éventuellement des autres corps précités. Ce mélange a lieu dans les appareils appropriés utilisés par les fabricants de caoutchouc. Toutefois, étant donné le choix des constituants, il est beaucoup plus facile d'arriver à des mélanges homogènes avec des moyens moins puissants et pendant un temps plus court que pour la préparation de compositions organopolysiloxaniques usuelles renfermant à la place des huiles $A_1$ des gommes diorganopolysiloxaniques.

En particulier les mélangeurs à cylindres ne sont pas utilisables ce qui est un avantage puisqu'ils consomment du temps et de l'énergie. Par contre peuvent être employés des pétrins, ou des mélangeurs à fourreaux cylindriques équipés de vis, opérant en marche continue ou discontinue. Dans ces mélangeurs à fourreaux cylindriques les vis tournent et peuvent également être soumises à des mouvements de va-et-vient.

L'ordre d'introduction des divers constituants dans les appareils précités peut être quelconque. Néanmoins lorsque les mélanges des constituants sont chauffés à des températures supérieures à 60-80°C, dans le dessein d'accélérer, par exemple, le mouillage des charges $B_1$ par les huiles $A_1$ (ce qui permet de réduire le temps d'occupation des appareils), il est alors nécessaire d'ajouter le peroxyde de dichloro-2,4 benzoyle $D_1$ en dernier et seulement lorsque la température des mélanges est redescendue à un niveau convenable.

Les compositions obtenues sont des produits pâteux dont la valeur de la pénétration, mesurée selon la norme NF T 60-132, s'étale de 90 à 350, en général 100 à 330. Elles sont presque aussi aisément manipulables que les mastics silicones durcissant dès la température ambiante en présence d'humidité ou que les compositions organopolysiloxaniques durcissant par la réaction d'addition SiH-Si Vinyle.

Selon la procédé conforme à l'invention, les compositions précédentes sont durcies par moulage par injection à l'aide de machines d'injection analogues à celles utilisées pour les matières plastiques de basse et moyenne viscosités à l'état fondu.

Ces machines d'injection sont bien connues; elles sont employées par exemple pour le moulage du polystyrène, polyéthylène, polyamide, de l'acétate de cellulose. Elles comprennent généralement:

1. un cylindre d'injection logeant une vis ou un piston, dont l'avant est équipé d'une buse d'injection,

2. un mécanisme de pression transmettant au piston ou à la vis la force nécessaire à l'injection des produits,

3. un moule à deux matrices, s'ouvrant à l'arrière,

4. un dispositif de verrouillage du moule assurant sa fermeture, ou son ouverture, et l'éjection des pièces moulées.

Les compositions, étant pâteuses, peuvent être introduites dans le système d'alimentation des machines d'injection par simple pompage à l'aide de pompes à piston. Elles sont ensuite injectées sous une pression inférieure à 45 mPa, de préférence inférieure à 40 mPa, dans un moule porté à une température située dans une plage allant de 125 à 225°C, de préférence 130°C à 215°C. La durée du durcissement dans le moule est inférieure à 15 secondes, de préférence inférieure à 12 secondes, et la durée totale d'un cycle de moulage est inférieure à 25 secondes, de préférence inférieure à 22 secondes. On peut ainsi effectuer au moins 144 moulages par heure, de préférence 163 moulages.

Ce procédé donne la possibilité aux techniciens du moulage par injection des caoutchoucs silicones, de travailler à grandes cadences dans une plage de températures courante et facile à réguler. Il a l'avantage, en outre, de mettre en œuvre des compositions pâteuses «monocomposantes», ce qui exclut des prédosages et prémélanges souvent sources d'erreurs et de pertes de temps, et également l'avantage d'assurer le durcissement des compositions sans risque de prévulcanisation, donc de grillage. Les compositions pâteuses durcissant par la réaction d'addition SiH–Si vinyle ne possèdent pas toujours les avantages précités.

Le procédé de la présente invention permet de fabriquer des pièces moulées de toutes formes et dimensions ayant de bonnes caractéristiques physiques et dynamométriques; il est particulièrement valable pour la fabrication de capuchons de bougies, de bonnettes de phares, de connecteurs électriques, de joints toriques.

Les exemples suivants illustrent l'invention:

Exemple 1

On charge dans un pétrin:

– 100 parties d'une huile α–ω bis (diméthylvinylsiloxy)diméthylpolysiloxanique de viscosité 100000 mPa·s à 25°C

– 4 parties d'une huile α–ω dihydroxydiméthylpolysiloxanique de viscosité 50 mPa·s à 25°C

– 10 parties d'une silice de combustion de surface spécifique BET 200 $m^2/g$, de diamètre moyen des particules primaires 21 nm, de densité apparente 50 g/l

– 35 parties d'une silice de précipitation de surface spécifique BET 170 $m^2/g$ de densité apparente 70 g/l, de diamètre moyen des particules primaire 18 nm.

Le mélange, soumis à un malaxage efficace, est chauffé progressivement jusqu'à 150°C, il est ensuite malaxé à cette température pendant 1 heure. Après refroidissement vers 30°C, on ajoute au mélange 2,25 parties d'une pâte formée par dispersion de 50 parties du peroxyde de dichloro-2,4 benzoyle dans 50 parties d'une huile α–ω bis-(triméthylsiloxy)diméthylpolysiloxanique de viscosité 1000 mPa·s à 25°C.

La composition obtenue (nommée $S_1$), a une pénétration mesurée selon la norme NF T 60-132 (correspondant à la norme ASTM D 217-68) de 190. On durcit cette composition $S_1$ en plaques d'élastomères de 2 mm d'épaisseur par chauffage, dans un moule, pendant 8 minutes à 115°C, sous une pression de 50 bars. Les plaques sont ensuite chauffées 4 heures à 200°C, à l'air ambiant dans une étuve ventilée.

On mesure, sur ces plaques, par prélèvements d'échantillons normalisés, les propriétés suivantes:

Dureté Shore A selon la norme ASTM D 2240

Résistance à la rupture en mPa selon la norme AFNOR T 46-002 (correspondant à la norme ASTM D 412)

Allongement à la rupture en % selon la norme précédente.

Les résultats des mesures sont les suivants:

Dureté Shore 56
Résistance à la rupture 7,5 mPa
Allongement à la rupture 510%

Une autre fraction de la composition $S_1$ est introduite directement, par l'intermédiaire d'une pompe aspirante et refoulante, dans le corps d'une machine d'injection classique pour matières plastiques. Cette machine est constituée:

1. d'un fourreau cylindrique terminé par une buse d'injection équipée d'un obturateur, logeant une vis de diamètre 52 mm et de longueur 12 fois ce diamètre,

2. d'un moule à deux matrices et à 4 empreintes, placé à la sortie du fourreau, porté à une température de 150°C.

La vis injecte dans le moule, sous une pression d'injection de 10 mPa, environ 43 g de la composition $S_1$. La durée de durcissement dans le moule est de 10 secondes. La durée d'un cycle de moulage est de 20 secondes; on effectue donc 180 moulages par heure. L'aspect des pièces moulées est excellent et le démoulage facile; il n'est pas nécessaire d'ébavurer les pièces.

On porte la température du moule à 180°C: la pression d'injection est de 15 mPa mais la durée du durcissement dans le moule se maintient à 10 secondes et celle d'un cycle de moulage à 20 secondes. On porte la température du moule à 200°C: la pression d'injection est de 37 mPa mais les durées de durcissement et d'un cycle de moulage ne changent pas. On remarque par ailleurs que l'aspect des pièces moulées est excellent à 180 ou 200°C.

A titre comparatif on modifie la composition $S_1$ en utilisant, lors de sa préparation, à la place de 2,25 parties de la pâte formée par dispersion de 50 parties du peroxyde de dichloro-2,4 benzoyle dans 50 parties d'une huile silicone, 1,5 partie du bis(t-butylperoxy)-2,5 diméthyl-2,5 hexane. Cette nouvelle composition est moulée par injection avec la machine décrite ci-avant. On constate que, pour obtenir des pièces moulées de bonne qualité, il faut opérer à une température de 200°C, avec une durée de durcissement dans le moule

de 20 secondes et une pression d'injection de 7,5 mPa. La durée d'un cycle de démoulage est de 30 secondes; on fait ainsi seulement 120 moulages par heure au lieu de 180 précédemment.

Egalement, à titre comparatif, on modifie la compositionn $S_1$ en remplaçant, lors de sa préparation, les 100 parties de l'huile silicone de viscosité 100000 mPa·s à 25°C par 100 parties d'une gomme α-ω bis(diméthylvinyl)polydiméthylsiloxanique de viscosité 50 millions de mPa·s à 25°C.

Cette nouvelle composition d'aspect caoutchouteux n'est pas pompable; elle est placée manuellement dans le cylindre d'injection de la machine d'injection décrite ci-dessus. Elle est ensuite moulée par injection. On constate que pour obtenir des pièces moulées de bonne qualité il faut opérer à une température de 120°C, avec une durée de durcissement dans le moule de 20 secondes, et une pression minimum d'injection de 40 mPa. La durée d'un cycle de moulage est de 30 secondes. Un essai de moulage est exécuté à une température du moulage de 150°C (pour essayer de diminuer la durée de durcissement); il conduit à des pièces moulées incomplètes ou déformées par suite à la fois d'un grillage (durcissement prématuré) de la composition et d'une demande trop importante de pression d'injection ne pouvant être fournie par la machine.

Exemple 2

4 compositions $S_2$, $S_3$, $S_4$ et $S_5$ sont préparées selon le mode de fabrication de la composition $S_1$. Toutefois, des modifications sont apportées concernant la quantité pondérale et/ou la nature des silices introduites dans la composition $S_1$. Ces modifications, et aussi l'addition d'autres constituants, sont indiquées ci-après:

Composition $S_2$

Les 10 parties de la silice de combustion de surface spécifique BET 200 m²/g, et les 35 parties de la silice de précipitation de surface spécifique BET 170 m²/g, sont remplacées par 45 parties d'une silice de précipitation, traitée par du diméthyldichlorosilane, de surface spécifique BET 140 m²/g, de diamètre moyen des particules primaires 17 nm, de densité apparente 128 g/l.

Composition $S_3$

Les 10 parties de la silice de combustion de surface spécifique BET 200 m²/g, sont remplacées par 10 parties de la silice de précipitation de surface spécifique BET 170 m²/g; la quantité présente dans la composition $S_3$ de cette dernière silice est donc de 45 parties.

Composition $S_4$

Les 35 parties de la silice de précipitation, de surface spécifique BET 170 m²/g, sont remplacées par 15 parties d'une silice de combustion traitée par de l'octaméthylcyclotétrasiloxane, de surface spécifique BET 300 m²/g, de diamètre moyen des particules primaires 8 nm, de densité apparente 60 g/l.

Composition $S_5$

0,1 parties du silane de formule $CH_2=C(CH_3)COO(CH_2)_3Si(OCH)_3)_3$ est ajoutée aux constituants de $S_1$.

On prélève une fraction de chacune des compositions $S_2$, $S_3$, $S_4$ et $S_5$ et mesure leur pénétration. On mesure également les propriétés mécaniques des élastomères issus du durcissement de ces compositions. Les techniques de mesures et le procédé de durcissement sont ceux décrits à l'exemple 1.

Les résultats sont les suivants:

| | Penetration | Dureté shore n | Résistance à la Rupture en mPa | Allongement à % |
|---|---|---|---|---|
| $S_2$ | 300 | 49 | 6,7 | 400 |
| $S_3$ | 220 | 56 | 6,6 | 340 |
| $S_4$ | 190 | 43 | 7,5 | 600 |
| $S_5$ | 160 | 61 | 7,2 | 290 |

Une autre fraction de chacune des compositions $S_2$, $S_3$, $S_4$ et $S_5$ est moulée par injection sur la presse d'injection décrite à l'exemple 1; le moule est porté à 150°C et la pression d'injection est de l'ordre de 10 mPa.

On constate qu'on obtient des pièces moulées de bonne qualité avec, pour les 4 compositions, une durée de durcissement dans le moule de 8 secondes, et une durée d'un cycle de démoulage de 18 secondes. On effectue ainsi 200 moulages par heure (les fractions des 4 compositions $S_2$, $S_3$, $S_4$ et $S_5$ sont évidemment introduites, dans la machine d'injection, par pompage selon le processus indiqué à l'exemple 1 pour l'introduction de la composition $S_1$).

## Revendications

1. Procédé de moulage par injection, sur des machines d'injection opérant à basses pressions d'injection, de compositions organopolysiloxaniques, caractérisé en ce que les compositions organopolysiloxaniques sont pâteuses, présentent une viscosité s'étalant de 55000 Pa·s à 25°C à 4000 Pa·s à 25°C et sont formées par mélange de (les parties et les pourcentages sont exprimés en poids):

$A_1$ 100 parties d'huiles diorganopolysiloxaniques de viscosité 500 à 300000 mPa·s à 25°C, constituées d'une succession de motifs de formule $R_2SiO$ et bloquées à chaque extrémité de leur chaîne par des motifs de formule $R_2R'SiO_{0,5}$, dans lesquelles les symboles R, identiques ou différents, représentent des radicaux hydrocarbones, substitués ou non par des atomes d'halogènes, des groupes cyano, ayant de 1 à 8 atomes de carbone, le symbole R' a la signification des symboles R ou représente un radical hydroxyle, alcoxyle ayant de 1 à 4 atomes de carbone, β-méthoxyéthoxyle,

$B_1$ 10 à 75 parties de silices renforçantes finement

divisées, de surface spécifique d'au moins 50 $m^2/g$,

$C_1$ 1 à 20 parties d'agents antistructures,

$D_1$ 0,1 à 4 parties du peroxyde de dichloro-2,4 benzoyle, et en ce que l'on effectue le moulage sur une plage de températures allant de 125 à 225°C.

2. Procédé selon la revendication 1, caractérisé en ce que l'on effectue le moulage sur une plage de température allant de 130 à 215°C.

3. Procédé selon l'une quelconque des revendications 1 et 2, caractérisé en ce qu'on effectue le moulage pendant une durée de durcissement inférieure à 15 secondes et une durée d'un cycle de moulage inférieure à 25 secondes.

4. Procédé selon l'une quelconque des revendications 1 à 3, dans lequel au moins 5% des constituants $B_1$ décrits à la revendication 1, sont traités par des composés organosiliciques apportant des motifs choisis parmi ceux de formules $(CH_3)_2SiO$, $CH_3(CH_2{=}CH)SiO$, $(CH_3)_3SiO_{0,5}$, $(CH_3)_2(CH_2{=}CH)SiO_{0,5}$.

5. Procédé selon l'une quelconque des revendications 1 à 4 dans lequel sont ajoutés aux constituants $A_1$, $B_1$, $C_1$ et $D_1$, décrits à la revendication 1, d'autres constituants, utilisés à raison de 0,05 à 5 parties pour 100 parties des constituants $A_1$, choisis parmi les:

- les silanes de formules:

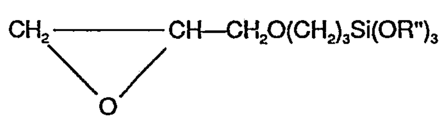

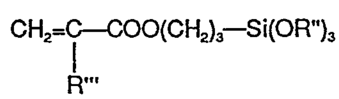
,

$CH_2{=}CH{-}Si(OR'')_3$

dans lesquelles les symboles R″ représentent des radicaux méthyles, éthyles, n-propyles, β-méthoxyéthyles et le symbole R‴ représente un atome d'hydrogène ou le radical méthyle,
- les produits d'hydrolyse partielle et de cohydrolyse partielle des silanes précédents.

## Patentansprüche

1. Verfahren zum Spritzgiessen auf Spritzgussmaschinen, die bei niedrigen Einspritzdrükken arbeiten, von Organopolysiloxanzusammensetzungen, dadurch gekennzeichnet, dass die Organopolysiloxanzusammensetzungen pastös sind, eine Viskosität von 55000 Pa·s bei 25°C bis 4000 Pa·s bei 25°C aufweisen und gebildet sind durch Vermischen von (die Teile und Prozentsätze sind in Gewicht ausgedrückt):

$A_1$ 100 Teilen Diorganopolysiloxanölen der Viskosität von 500 bis 300000 mPa·s bei 25°C, gebildet aus einer Folge von Gruppierungen der Formel $R_2SiO$ und blockiert an jedem Ende ihrer Kette durch Gruppierungen der Formel $R_2R'SiO_{0,5}$, wobei die Symbole R, die identisch oder verschieden sind, Kohlenwasserstoffreste, die substituiert oder nicht substituiert sind durch Halogenatome, Cyanogruppen, mit 1 bis 8 Kohlenstoffatomen bedeuten, das Symbol R′ die Bedeutung der Symbole R hat oder einen Hydroxyl-, Alkoxyrest mit 1 bis 4 Kohlenstoffatomen, β-Methoxyethoxyl bedeutet,

$B_1$ 10 bis 75 Teilen feinverteilter verstärkender Kieselerden mit einer spezifischen Oberfläche von mindestens 50 $m^2/g$,

$C_1$ 1 bis 20 Teilen Antistrukturmitteln,

$D_1$ 0,1 bis 4 Teilen 2,4-Dichlorbenzoylperoxid, und dass man das Formen in einem Temperaturbereich von 125 bis 225°C durchführt.

2. Verfahren gemäss Anspruch 1, dadurch gekennzeichnet, dass man das Formen in einem Temperaturbereich von 130 bis 215°C durchführt.

3. Verfahren gemäss einem der Ansprüche 1 und 2, dadurch gekennzeichnet, dass man das Formen während einer Härtungsdauer unterhalb 15 Sekunden und einer Dauer eines Presscyclus unterhalb 25 Sekunden durchführt.

4. Verfahren gemäss einem der Ansprüche 1 bis 3, dadurch gekennzeichnet, dass wenigstens 5% der Bestandteile $B_1$, die in Anspruch 1 beschrieben sind, mit Organosiliciumverbindungen behandelt werden, die Gruppierungen einbringen, ausgewählt unter solchen der Formeln $(CH_3)_2SiO$, $CH_3(CH_2{=}CH)SiO$, $(CH_3)_3SiO_{0,5}$, $(CH_3)_2(CH_2{=}CH)SiO_{0,5}$.

5. Verfahren gemäss einem der Ansprüche 1 bis 4, dadurch gekennzeichnet, dass den Bestandteilen $A_1$, $B_1$, $C_1$ und $D_1$, die in Anspruch 1 beschrieben sind, andere Bestandteile zugefügt werden, die in einer Menge von 0,05 bis 5 Teile pro 100 Teile der Bestandteile $A_1$ verwendet werden, ausgewählt unter:
- den Silanen der Formeln:

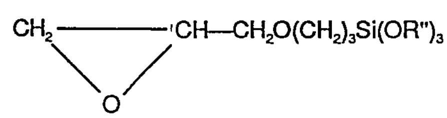

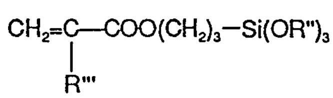
,

$CH_2{=}CH{-}Si(OR'')_3$

worin die Symbole R″ Methyl-, Ethyl-, n-Propyl- β-Methoxyethylreste bedeuten und das Symbol R‴ ein Wasserstoffatom oder den Methylrest bedeutet,
- den Produkten der teilweisen Hydrolyse und teilweisen Cohydrolyse der vorstehenden Silane.

## Claims

1. Process for injection moulding of organopolysiloxane compositions on injection machines operating at low injection pressures, characterised in that the organopolysiloxane compositions are in paste form, have a viscosity ranging from 55,000 Pa·s at 25°C to 4,000 Pa·s at 25°C and are formed by mixing the following (the parts and percentages being expressed by weight):

$A_1$: 100 parts of diorganopolysiloxane oils of viscosity 500 to 300,000 mPa·s at 25°C, the oils consisting of a succession of units of the formula $R_2SiO$, blocked at each chain end by units of the formula $R_2R'SiO_{0.5}$, in which the symbols R, which may be identical or different, represent hydrocarbon radicals which may or may not be substituted by halogen atoms or cyano groups having from 1 to 8 carbon atoms, and the symbol R′ has the meaning of the symbols R or represents a hydroxyl radical, an alkoxy radical having from 1 to 4 carbon atoms or a β-methoxyethoxyl radical,

$B_1$: 10 to 75 parts of finely divided reinforcing silicas having a specific surface of at least 50 $m^2/g$,

$C_1$: 1 to 20 parts of anti-structure agents, and

$D_1$: 0.1 to 4 parts of 2,4-dichlorobenzoyl peroxide, and in that the moulding is carried out in a temperature range of from 125°C to 225°C.

2. Process according to Claim 1, characterized in that the moulding is carried out in a temperature range of from 130°C to 215°C.

3. Process according to any one of Claims 1 and 2, characterised in that the moulding is carried out with a hardening time of less than 15 seconds and a moulding cycle of less than 25 seconds.

4. Process according to any one of Claims 1 to 3, in which at least 5% of the constituents $B_1$ described in Claim 1 are treated with organosilicon compounds which provide groups chosen from among those of the formulae $(CH_3)_2SiO$, $CH_3(CH_2{=}CH)SiO$, $(CH_3)_3SiO_{0.5}$ and $(CH_3)_2(CH_2{=}CH)SiO_{0.5}$.

5. Process according to any one of Claims 1 to 4, in which to the constituents $A_1$, $B_1$, $C_1$ and $D_1$ described in Claim 1 there are added other constituents used in an amount of 0.05 to 5 parts per 100 parts of the constituents $A_1$ and chosen from among

- the silanes of the formulae:

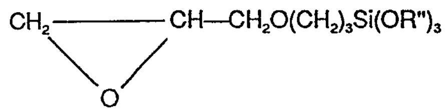

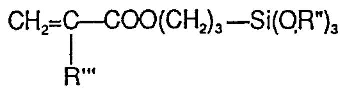

and

$CH_2{=}CH{-}Si(OR'')_3$

in which the symbols R″ represent methyl, ethyl, n-propyl or β-methoxyethyl radicals and the symbol R‴ represents a hydrogen atom or the methyl radical, and

- the products of partial hydrolysis and partial cohydrolysis of the above silanes.